# EUROPEAN PATENT APPLICATION

(11) **EP 1 408 003 A1**
(43) Date of publication of application: **14.04.2004**
(21) Application number: 03022643.5
(22) Date of filing: 06.10.2003
(51) Int. Cl.: C01B 3/38, C01B 3/32, H01M 8/06

(54) **Hydrogen generator and electric generator using the same**

(30) Priority: 10.10.2002 JP 2002297300
(71) Applicant: MATSUSHITA ELECTRIC INDUSTRIAL CO., LTD., Kadoma-shi, Osaka (JP)
(72) Inventor: Maenishi, Akira, Ikeda-shi, Osaka 563-0055 (JP); Asou, Tomonori, Kitakatsuragi-gun, Nara 635-0831 (JP); Suzuki, Motohiro, Osaka 564-0081 (JP); Taguchi, Kiyoshi, Osaka-shi, Osaka 538-0052 (JP)
(74) Representative: Patentanwälte Leinweber & Zimmermann

(57) **Abstract**

The present invention provides a hydrogen generator capable of preventing emission of CO and hydrogen, generating hydrogen in a clean and safe manner with high reforming efficiency and accelerating water vaporization immediately after the start-up to reduce the start-up time, the hydrogen generator including: a raw material supply part for supplying a raw material containing a compound formed of at least carbon and hydrogen; a water supply part for supplying water; a water vaporization part for vaporizing water supplied from the water supply part; a reforming part including a reforming catalyst for generating reformed gas from the raw material and the water by steam reforming; a burner for heating the reforming part; a fuel supply part for supplying fuel to the burner; a first air supply part for supplying air for combustion to the burner; and a combustion catalyst arranged in a combustion gas flow path for passing combustion gas discharged from the burner.

## Description

### BACKGROUND OF THE INVENTION

The present invention relates to a hydrogen generator for generating hydrogen-rich gas, which is supplied to devices utilizing hydrogen such as fuel cells, with use of hydrocarbon materials such as natural gas, LPG, gasoline, naphtha, kerosene or methanol as a principle starting material.

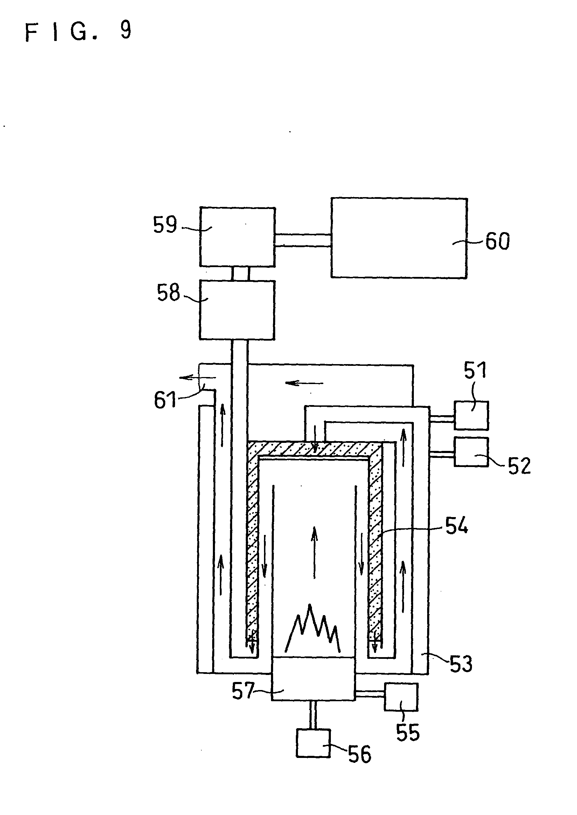

Referring to FIG. 9, a structure of a conventional hydrogen generator is explained. The conventional hydrogen generator includes a raw material supply part 51 for supplying a raw material, which is mainly a hydrocarbon compound formed of at least carbon and hydrogen atoms, a water supply part 52 for supplying water required for a reforming reaction and a water vaporization part 53 for vaporizing water supplied from the water supply part 52. The water vaporization part 53 is connected to a reforming part 54 filled with a reforming catalyst. A burner 57 is arranged in proximity to the reforming part 54, which is provided with an air supply part 55 for supplying air and a fuel supply part 56 for supplying fuel.

High temperature combustion gas generated in the burner 57 heats the reforming part 54 and then emitted as exhaust gas from an exhaust hole 61. On the other hand, reformed gas discharged from the reforming part 54 is sent to a shifting part 58 filled with a shifting catalyst. Shifted gas discharged from the shifting part 58 is sent to a CO oxidation part 59 filled with a CO oxidation catalyst. Through a CO oxidation reaction, the CO concentration in the shifted gas is reduced to 20 ppm or lower. Thus, the resulting hydrogen-rich product gas is sent from the CO oxidation part 59 to a fuel cell 60.

In the hydrogen generator, a large amount of hydrogen is obtained from a small amount of supplied gas if the reforming efficiency, i.e., the ratio of hydrogen generated to the supplied gas, is high. Therefore, improvement in reforming efficiency is the major object in developing the hydrogen generator. In order to increase the reforming efficiency, an air ratio in the burner 57 is reduced to 1.5 to 1.0 to raise the temperature of flame in the burner 57 and to reduce a quantity of heat discharged out of the exhaust hole 61. The air ratio mentioned herein is the ratio of air quantity supplied to the burner 57 to air quantity theoretically required for combustion of the fuel in the burner 57 (air quantity supplied/theoretical air quantity).

In the conventional hydrogen generator, however, air shortage is locally caused in the burner 57 during combustion and CO in a concentration of about 100 ppm is emitted from the burner 57 if the air ratio is set to about 1.2. If the air ratio is further reduced to about 1.1, the CO concentration increases, resulting in the emission of CO in a concentration of about 1,000 ppm. Considering that there are variations in quantities of air supplied from the air supply part 55 and fuel supplied from the fuel supply part 56, there is no choice but to set the air ratio to about 1.5. In this case, the reforming efficiency decreases by 1 to 2 % as compared with that obtained under the air ratio of 1.2.

Further, product gas discharged from the CO oxidation part 59 immediately after the start-up of the hydrogen generator contains CO of 20 ppm or higher, which cannot be fed into the fuel cell 60. The product gas contains combustible gases such as hydrogen and hydrocarbons in addition to CO. For effective utilization of the combustible gases, the product gas generated immediately after the start-up is fed to the burner 57 and combusted to heat the reforming part 54.

Immediately after the start-up, however, temperatures of the reforming part 54, shifting part 58 and CO oxidation part 59 are not constant and the reaction state in each part is varied depending on the temperature. That is, the flow rate and composition of the product gas from the CO oxidation part 59 are not constant. Accordingly, the state of the combustible gas fed to the burner 57 is changing and hence the combustion in the burner 57 becomes unstable, which may temporarily cause emission of CO and hydrogen that have not been combusted completely.

Moreover, heat generated by the combustion in the burner 57 immediately after the start-up is first utilized to heat the periphery of the burner 57 and the entire reforming part 54. Therefore, the heat is hard to be transferred to the water vaporization part 53, which takes a long time to start the vaporization. This has been a cause of a long start-up time of the hydrogen generator.

To solve the above-described problems, the present invention intends to provide a hydrogen generator capable of preventing emission of CO and hydrogen, which is apt to occur if the air ratio in the burner 57 is reduced or during the start-up time, and generating hydrogen in a clean and safe state with high reforming efficiency. Further, the present invention intends to provide a hydrogen generator capable of accelerating water vaporization immediately after the start-up and reducing the start-up time.

### BRIEF SUMMARY OF THE INVENTION

To solve the above-described problems, the present invention provides a hydrogen generator comprising: a raw material supply part for supplying a raw material containing a compound formed of at least carbon and hydrogen; a water supply part for supplying water; a water vaporization part for vaporizing water supplied from the water supply part; a reforming part including a reforming catalyst for generating reformed gas from the raw material and the water by steam reforming reaction; a burner for heating the reforming part; a fuel supply part for supplying fuel to the burner; a first air supply part for supplying air for combustion to the burner; and a combustion catalyst arranged in a combustion gas flow path for passing combustion gas discharged from the burner.

It is effective that the burner is arranged in proximity to the water vaporization part.

It is effective that product gas discharged from the hydrogen generator is mixed with fuel supplied from the fuel supply part and fed into the burner.

It is effective that the combustion catalyst is in contact with the water vaporization part.

It is effective that the combustion catalyst is integrated with the water vaporization part.

It is effective that the combustion catalyst is applied to the surface of the water vaporization part.

It is effective that the combustion gas in the combustion gas flow path has a temperature not lower than 100°C and not higher than 200°C. That is, it is preferred to arrange the combustion catalyst such that the combustion gas in the combustion gas flow path has a temperature within the above-described range.

It is effective that the combustion gas flow path surrounds the reforming part and the water vaporization part surrounds the combustion gas flow path.

It is effective that a second air supply part for supplying air to the combustion catalyst in the combustion gas flow path is provided between the burner and the combustion catalyst.

It is effective that the second air supply part supplies air such that the ratio of air quantity supplied from the first air supply part to air quantity theoretically required for combustion of fuel in the burner becomes not larger than 1, and the ratio of total air quantity supplied from the first air supply part and the second air supply part to the air quantity theoretically required for combustion of fuel in the burner becomes not smaller than 1.

It is effective that the combustion catalyst is supported by a carrier formed of a corrugated thin metal plate and/or a flat thin metal plate. In this case, the combustion catalyst is made of the carrier and a catalytic species supported by the carrier.

It is effective that the combustion catalyst is in the honeycomb form and/or the pellet form. In this case, the carrier may be in the honeycomb form or the catalyst species may be in the honeycomb or pellet form.

The present invention further provides an electric generator comprising the above hydrogen generator and a fuel cell for generating electric power using oxygen-containing oxidant gas and hydrogen-containing reformed gas supplied by the hydrogen generator.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a view illustrating a structure of a hydrogen generator according to Embodiment 1 of the present invention.

FIG. 2 is a graph illustrating the reforming efficiency and the CO concentration with respect to the air ratio.

FIG. 3 is a graph illustrating the effect caused by providing a combustion catalyst.

FIG. 4 is a view illustrating a structure of a hydrogen generator according to Embodiment 2 of the present invention.

FIG. 5 is a view illustrating a structure of a hydrogen generator according to Embodiment 3 of the present invention.

FIG. 6 is a view illustrating a structure of a hydrogen generator according to Embodiment 4 of the present invention.

FIG. 7 is a view illustrating a structure of a combustion catalyst carrier of the present invention.

FIG. 8 is a view illustrating a structure of a hydrogen generator according to Embodiment 5 of the present invention.

FIG. 9 is a view illustrating a structure of a conventional hydrogen generator.

### DETAILED DESCRIPTION OF THE INVENTION

According to the present invention, clean exhaust gas free from CO and hydrogen is obtained. With use of the exhaust gas, water vaporization is accelerated and high reforming efficiency is achieved.

Further, exhaust gas discharged immediately after the start-up of the hydrogen generator also becomes free from CO and hydrogen and a start-up time of the hydrogen generator is reduced due to the accelerated water vaporization.

Moreover, since the reforming part is surrounded by the water vaporization part, heat dissipation from the reforming part is captured by the water vaporization part. Therefore, the heat is utilized effectively.

According to the present invention, air for the combustion catalyst is supplied between the burner and the combustion catalyst. Thereby, reaction on the combustion catalyst is caused with reliability, inhibiting the CO emission from the exhaust hole.

Immediately after the start-up of the hydrogen generator, the ratio of the air quantity supplied to the burner to the air quantity theoretically required for combustion in the burner is set not larger than 1 and the ratio of the total air quantity supplied to the burner and the combustion gas flow path to the air quantity theoretically required for combustion in the burner is set not smaller than 1. Thereby, the combustion on the combustion catalyst is enhanced to further accelerate the water vaporization.

Further, the combustion catalyst is supported on a carrier made of a corrugated and/or flat thin metal plate. Thereby, the combustion catalyst is incorporated in the optimum form in the combustion gas flow path which is small in thermal capacity.

If the combustion catalyst is applied to the wall of the water vaporization part to form a combustion catalyst layer, the water vaporization is accelerated.

Further, if a plurality of heat transfer fins are arranged on the wall of the reforming part and the combustion catalyst is applied to the fins, heat quantity transferred to the reforming part increases and the thermal efficiency improves.

Hereinbelow, embodiments of the hydrogen generator according to the present invention is explained with reference to the figures.

### [Embodiment 1]

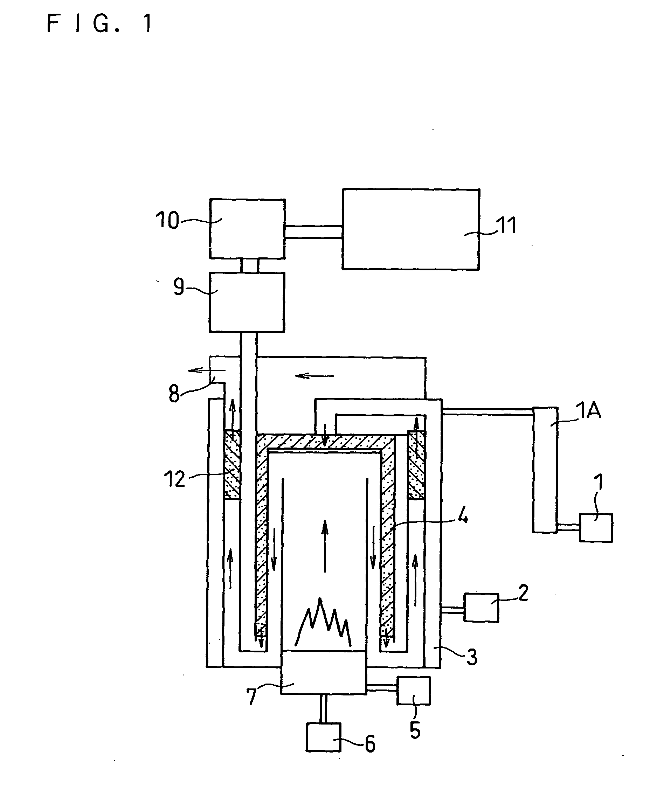

FIG. 1 is a schematic longitudinal section illustrating a structure of a hydrogen generator according to Embodiment 1 of the present invention. The hydrogen generator shown in FIG. 1 includes a raw material supply part 1 for supplying a material to be subjected to a reforming reaction. Downstream of the raw material supply part 1, a desulfurization part 1A for reducing a concentration of a poisoning substance for a catalyst, such as sulfur contained in raw material gas, is provided. A water supply part 2 supplies water required for the reforming reaction and is connected to a water vaporization part 3 for vaporizing water supplied. Vapor from the water vaporization part 3 and a raw material fed from the raw material supply part 1 are introduced to a reforming part 4 filled with a reforming catalyst, which is mainly Ru.

A burner 7 is arranged in proximity to the reforming part 4, to which a first air supply part 5 for supplying air for combustion and a fuel supply part 6 for supplying fuel are connected. Combustion gas generated in the burner 7 is passed through the periphery of the reforming part 4 and emitted from an exhaust hole 8. In part of a combustion gas flow path between the burner 7 and the exhaust hole 8 close to the water vaporization part 3, a combustion catalyst 12 prepared by supporting a platinum catalyst on a high refractory thin metal plate is arranged. Reformed gas discharged from the reforming part 4 is sent to a shifting part 9 filled with a shifting catalyst and shifted gas from the shifting part 9 is sent to a CO oxidation part 10 filled with a CO oxidation catalyst. Then, product gas from the CO oxidation part 10 is sent to a fuel cell 11.

The raw material supplied from the raw material supply part 1 and the fuel supplied from the fuel supply part 6 are mainly composed of a hydrocarbon compound formed of at least carbon and hydrogen atoms. Examples thereof include gaseous hydrocarbon fuels such as natural gas (city gas) and LPG and liquid hydrocarbon fuels such as gasoline, kerosene and methanol.

Regarding the raw material supply part 1, water supply part 2, first air supply part 5 and fuel supply part 6, flow rate adjustment may be made with use of a pump, a fan or the like. Alternatively, a flow rate adjuster such as a valve may be provided downstream of the pump or the fan. In the present invention, all the supply parts described above have the function of flow rate adjustment, though not specifically shown. In the figures, arrows indicate a combustion gas flow.

Next, explanation is given as to how the hydrogen generator thus configured is operated when city gas is used as both of the raw material and fuel. City gas from the raw material supply part 1 and vapor generated in the water vaporization part 3 by vaporizing water supplied from the water supply part 2 are made into a gaseous mixture, which is fed to the reforming part 4 in which the temperature is raised to 600 to 700°C by the burner 7. Thereby, the reforming reaction is caused. Reformed gas obtained through the reforming reaction is sent to the shifting part 9 and shifted gas obtained through the shifting reaction is sent to the CO oxidation part 10.

In the CO oxidation part 10, hydrogen-rich product gas having the CO concentration of 20 ppm or lower is obtained through the CO oxidation reaction, which is sent to the fuel cell 11. When the air quantity supplied from the first air supply part 5 to the burner 7 is brought close to the theoretically required air quantity for combustion of the fuel (the air ratio is 1.0), the temperature of flame increases to raise the combustion gas temperature, thereby the quantity of heat transmission to the reforming part 4 increases. In addition, since the flow rate of the combustion gas is reduced by the quantity of the reduced air, a quantity of heat in the exhaust gas discharged from the exhaust hole 8 is reduced even if the gas temperature is unchanged. Thus, the combustion heat in the burner 7 is effectively utilized to improve the reforming efficiency.

Since the burner 7 combusts hydrogen-containing reformed gas, it is preferable to use a diffusive combustion burner rather than a premixed combustion burner in terms of safe combustion almost free from the occurrence of a flashback. The city gas used as the raw material has a sulfur content. However, since the sulfur content is reduced to a lower concentration in the desulfurization part 1A, the poisoning and deterioration of the downstream catalyst is inhibited. The combustion catalyst 12 may be prepared by supporting a platinum catalyst on a thin metal plate. The carrier for supporting the platinum catalyst may be in the honeycomb form or pellet form. In these cases, a contact area between the combustion gas and the combustion catalyst increases.

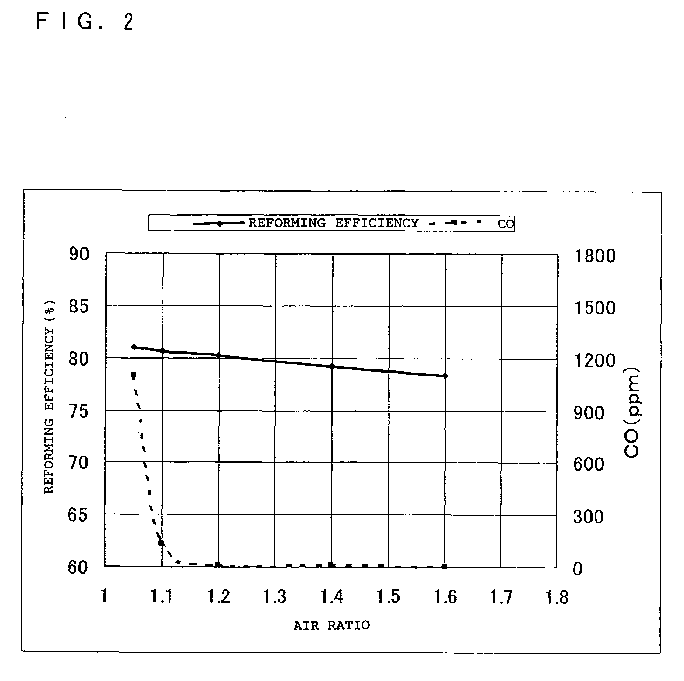

FIG. 2 shows the reforming efficiency and the CO concentration in the combustion gas (in the upstream of the combustion catalyst) with respect to the air ratio. FIG. 2 shows that the reforming efficiency increases by about 2 % in response to the reduction of the air ratio from 1.5 to 1.1. On the other hand, the CO concentration in the combustion gas discharged from the burner 7 is about 50 ppm when the air ratio is 1.2, while about 1,000 ppm when the air ratio is 1.1. A cause of this is related to the characteristic of the burner 7. That is, air shortage is locally caused in the burner 7 whereas on a whole there is a small surplus of air for combusting the city gas, thereby incomplete combustion is caused to emit CO. Depending on the conditions, hydrogen may possibly be emitted in addition to CO.

According to the present invention, the combustion catalyst 12 is arranged in a combustion gas flow path extending between the burner 7 and the exhaust hole 8. The combustion gas has a temperature of about 100°C at the exhaust hole 8 and a higher temperature in the combustion gas flow path. Accordingly, the temperature of the combustion catalyst 12 is not lower than 100°C. Since the combustion catalyst 12 supports a platinum catalyst, CO oxidation is caused to a sufficient degree as far as a small amount of oxygen is present at 100°C. Further, since hydrogen reacts with the catalyst at a reaction temperature lower than that of CO, hydrogen is also oxidized if the catalyst reaches the reaction temperature of CO.

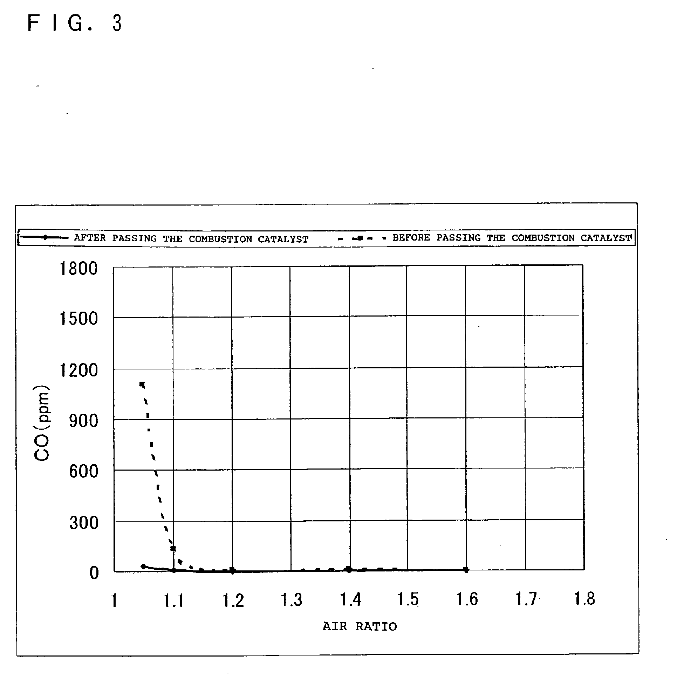

FIG. 3 shows CO concentrations in the combustion gas before and after passing through the combustion catalyst 12. Even if CO is discharged from the burner 7, the combustion catalyst 12 oxidizes the CO. Therefore, the CO emission from the exhaust hole 8 hardly occurs even if the air ratio is reduced to 1.05. For this reason, if the air ratio is set to 1.2, the CO emission is not caused even if the quantities of the city gas and the air supplied are not balanced to reduce the air ratio by about 10 %. Thus, high reforming efficiency is achieved and the exhaust gas can be made clean and safe.

The hydrogen generator according to the present invention, including those of the following Embodiments, preferably has a control part, which is not shown, for controlling the raw material supply part, water supply part, water vaporization part, reforming part, burner, fuel supply part, first air supply part and second air supply part.

### [Embodiment 2]

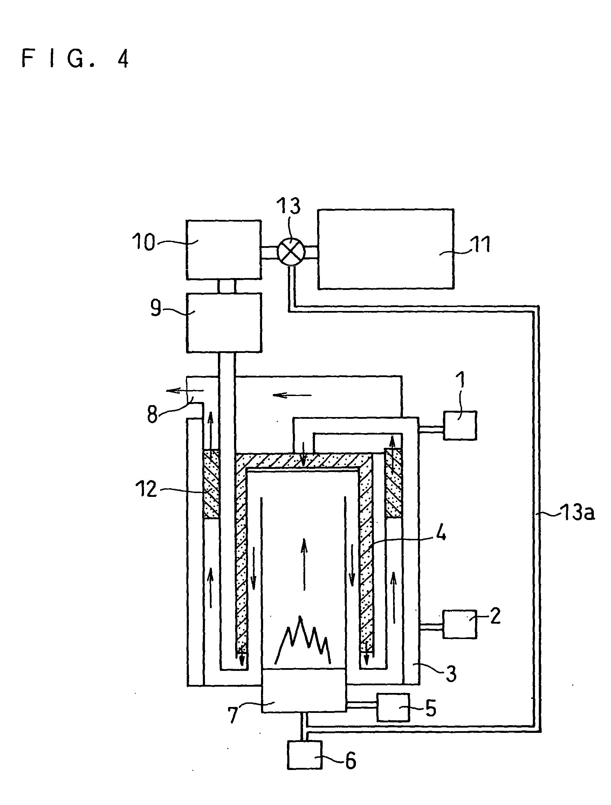

FIG. 4 shows a structure of a hydrogen generator according to Embodiment 2 of the present invention. The hydrogen generator according to Embodiment 2 is configured in the same manner as that of Embodiment 1 except that a three-way valve 13 is arranged between the CO oxidation part 10 and the fuel cell 11. By switching over the three-way valve 13, product gas from the CO oxidation part 10 can be fed to the fuel cell 11 or a connection part between the burner 7 and the fuel supply part 6 via a path 13a. During the start-up time of the hydrogen generator, the three-way valve 13 is opened to flow the product gas to the burner 7.

Explanation is given as to how the thus configured hydrogen generator works during the start-up time. First, city gas and air are supplied to the burner 7 from the fuel supply part 6 and the air supply part 5, respectively, to form flame. Thereby, the reforming part 4 and the water vaporization part 3 are heated. When the temperature in the water vaporization part 3 is raised to such a degree that allows vaporization of water, water is supplied from the water supply part 2 to generate vapor and city gas is supplied from the raw material supply part 1. Thus, a gaseous mixture of the vapor and the city gas is fed into the reforming part 4.

If the temperature in the reforming part 4 is not appropriate for causing the reforming reaction, the vapor and the city gas pass through the reforming part 4, shifting part 9 and CO oxidation part 10 and are sent to the burner 7 via the three-way valve 13. The city gas is being supplied to the burner 7 from the fuel supply part 6. However, if the city gas from the CO oxidation part 10 is fed through the three-way valve 13, the city gas supply from the fuel supply part 6 is stopped. Thereby, the combustion in the burner 7 is caused only by using the city gas from the CO oxidation part 10.

When the reforming part 4 reaches the reaction temperature of the reforming catalyst, the reforming reaction occurs to generate 4.6 moles of hydrogen from 1 mole of the city gas. That is, volume expansion of 4.6 times occurs in the reforming part 4. Then, the city gas and vapor retained in the shifting part 9 and the CO oxidation part 10 are forced out to the burner 7 in a stroke. Since the reaction rate varies depending on the temperature of the reforming catalyst, the flow rate and composition of the gas discharged from the reforming part 4 become considerably variable. Thus, the flame in the burner 7 is apt to be unstable.

The reactions in the shifting part 9 and the CO oxidation part 10 also vary depending on the temperature. Therefore, the quantity and composition of the gas fed to the burner 7 vary every moment. Therefore, the flame in the burner 7 is apt to be unstable especially immediately after the start-up. If incomplete combustion occurs locally, CO and hydrogen, the combustible gases, may be emitted.

Under the circumstances, the combustion catalyst 12 is arranged in the combustion gas flow path. Even if the combustion gas containing CO and hydrogen is emitted from the burner, the CO and hydrogen can be oxidized as long as air exists even in a small amount. Thereby, the emission of CO and hydrogen from the exhaust hole can be reduced to the minimum level.

### [Embodiment 3]

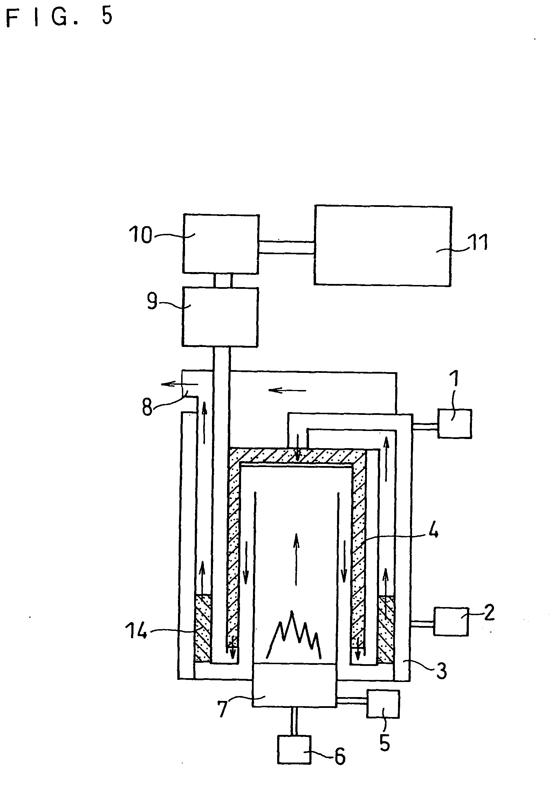

FIG. 5 is a view illustrating a structure of a hydrogen generator according to Embodiment 3 of the present invention. The hydrogen generator according to Embodiment 3 is configured in the same manner as that of Embodiment 1 except that the water vaporization part 3 is arranged to surround the reforming part 4 and a combustion catalyst 14 is arranged in part of the combustion gas flow path where the combustion gas temperature becomes 200°C or lower between the water vaporization part 3 in which water will be retained and the reforming part 4.

In the thus configured hydrogen generator, the reforming part 4 is surrounded by the water vaporization part 3. Therefore, heat dissipation from the high temperature reforming part 4 is transferred to the water vaporization part 3 under normal operating conditions. The heat dissipated from the reforming part 4 is effectively used for the water vaporization, while the surface of the water vaporization part 3 is kept at a relatively low temperature due to a large latent heat caused by the water vaporization. Therefore, heat dissipation from the water vaporization part 3 is controlled small and hence combustion heat from the burner 7 is effectively used. Thus, the reforming efficiency is improved.

For the start-up of the hydrogen generator, city gas and air are introduced into the burner 7 from the fuel supply part 6 and the air supply part 5, respectively, to form flame as described in Embodiment 2. The periphery of the burner 7 and the nearby reforming part 4 are heated by combustion heat from the burner 7, but it is hard to heat the water vaporization part 3 surrounding the reforming part 4 by the combustion heat. The water vaporization part 3 does not reach the temperature at which the water vaporization starts until the periphery of the burner 7 and the reforming part 4 are heated to some extent and then the combustion heat from the burner 7 begins to heat the water vaporization part 3. Thus, it takes a certain period of time after the start-up to start the water vaporization.

In this situation, the combustion catalyst 14 is arranged in part of the combustion gas flow path on an inner and lower side from the water vaporization part 3. The temperature of the combustion catalyst 14 is raised to 50 to 60°C by the combustion gas before the water vaporization part 3 starts the vaporization. If the flame in the burner 7 is unstable immediately after the start-up and hence CO and hydrogen are contained in the combustion gas, oxidation reaction occurs on the combustion catalyst 14. That is, the combustion catalyst 14 combusts the CO and at the same time, the water vaporization part 3 is heated to some extent by the combustion heat, thereby the water vaporization is accelerated. Thus, the start-up time of the hydrogen generator can be reduced.

Further, since the combustion gas temperature is 200°C or lower, heat generated by the oxidation of CO and hydrogen on the combustion catalyst, if any, is transferred to the adjacent water vaporization part 3 in which water is retained and hence the temperature of the combustion catalyst 14 is not raised over 200°C. Therefore, the catalyst activity is prevented from deterioration due to the temperature increase and the combustion catalyst 14 can be maintained in good condition even in a long time operation. Thus, a clean and safe hydrogen generator is achieved.

### [Embodiment 4]

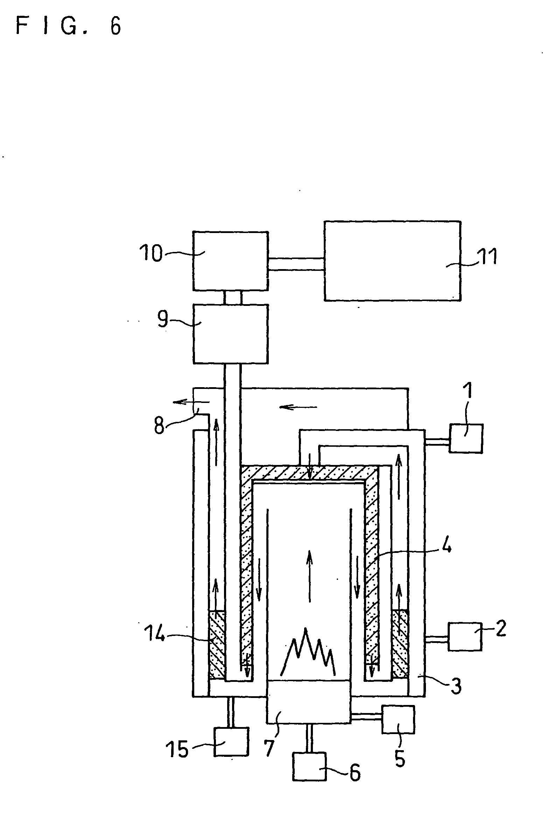

FIG. 6 is a view illustrating a structure of a hydrogen generator according to Embodiment 4 of the present invention. The hydrogen generator according to Embodiment 4 is substantially the same in structure as that of Embodiment 3 except that a second air supply part 15 for supplying air to the combustion catalyst is further arranged between the burner 7 and the combustion catalyst 14.

According to this structure, a certain quantity of air is supplied from the second air supply part 15. Thereby, CO emitted from the burner 7 which was not be able to be oxidized on the combustion catalyst 14 with oxygen remaining in the combustion gas from the burner 7 can also be oxidized completely because a sufficient quantity of air is fed to the upstream of the combustion catalyst 14. Simultaneously, the water vaporization part 3 is heated by the combustion heat.

In particular, the water vaporization is accelerated by setting the ratio of the air quantity supplied from the air supply part 5 to the theoretically required air quantity for combusting the fuel supplied from the fuel supply part 6 (the air ratio) not larger than 1.0 or smaller than 1.0 and the ratio of the total air quantity supplied from the air supply part 5 and the second air supply part 15 to the theoretically required air quantity for combusting the fuel in the burner 7 (the air ratio) not smaller than 1.0 during the start-up time of the hydrogen generator.

That is, by setting the air ratio smaller than 1.0, the burner 7 is brought into the incomplete combustion state. Then, the combustion gas containing combustible components which are not combusted yet is mixed with air supplied from the second air supply part 15 in such an amount that makes the air ratio not smaller than 1.0, and then the mixture is fed to the combustion catalyst 14. Thereby, the combustible components remaining in the combustion gas are completely combusted on the combustion catalyst 14. Further, since the combustion catalyst 14 is arranged on the inner and lower side from the water vaporization part 3 where water is apt to be retained, the water vaporization part 3 is heated by the combustion heat, accelerating the water vaporization.

The smaller the air ratio in the burner 7 is made, the more the amount of the combustible components flown into the combustion gas flow path increases. Therefore, the amount of combustible components to be combusted on the combustion catalyst 14 increases and the combustion heat increases, and as a result, the water vaporization part 3 is heated to a higher degree. Thus, the water vaporization is accelerated and the start-up time of the hydrogen generator is reduced.

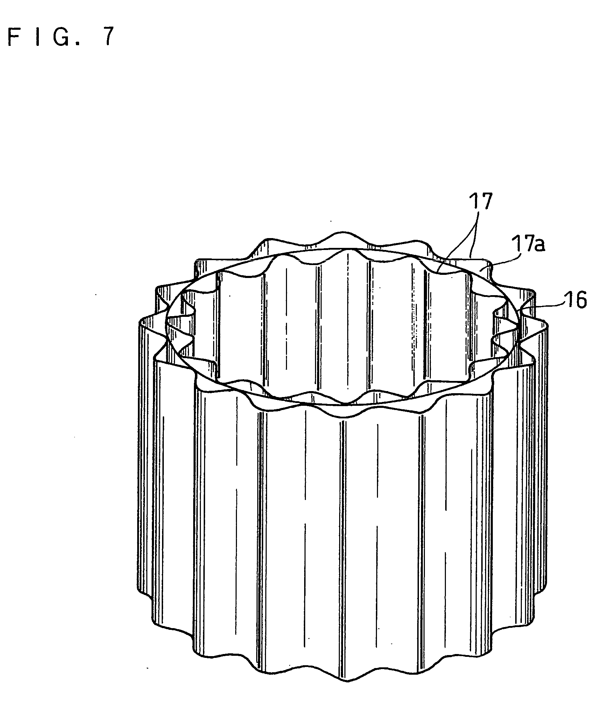

FIG. 7 is a schematic oblique view illustrating a structure of a carrier for the combustion catalyst used in the hydrogen generators according to Embodiments 1 to 5 of the present invention. The carrier shown in FIG. 7 is made of a combination of a flat thin metal plate 16 (0.05 mm in thickness) and corrugated thin metal plates 17, all of which are made of Fe-Cr-Al. The carrier can easily be formed into a shape that fits in the combustion gas flow path because it is made of metal. Further, by combining the flat plate and the corrugated plates, the carrier is provided with small cells (voids) 17a for passing the combustion gas. Thereby, the contact area between the combustion gas and the combustion catalyst increases, improving the efficiency of the combustion catalyst. Further, since the thin metal plates are small in thermal capacity and rapidly reach the temperature of the combustion gas flowing through them, it is possible to cause the oxidation reaction on the combustion catalyst soon after the start-up of the hydrogen generator.

If the corrugations of the corrugated thin metal plate are made smaller or larger in height, the size of the cells formed between the corrugated plate and the flat plate is reduced or increased. The size of the cells can suitably be adjusted by a skilled one depending on the amount of the combustion catalyst to be supported thereon and the flow rate of the combustion gas.

FIG. 7 shows an example of the carrier prepared by combining a single flat thin metal plate and two corrugated thin metal plates. As long as the combustion catalyst functions properly, there is no particular limitation to the shape and number of the corrugations, how to combine the plates and the material of the plates.

Instead of the corrugated thin metal plate shown in FIG. 7 having rounded corrugations, an embossed thin metal plate, a corrugated thin metal plate having angular or rectangular corrugations may be used as long as they can provide voids (cells) when combined with the flat thin metal plate. It is also possible to combine the above-listed plates capable of providing the voids by themselves.

In the above-mentioned Embodiments, platinum is used as a catalytic species for the combustion catalyst, but this is not limitative. Other elements than platinum that allow oxidation of CO may be used, e.g., platinum metals such as palladium and ruthenium and transition metals such as copper, iron and zinc.

### [Embodiment 5]

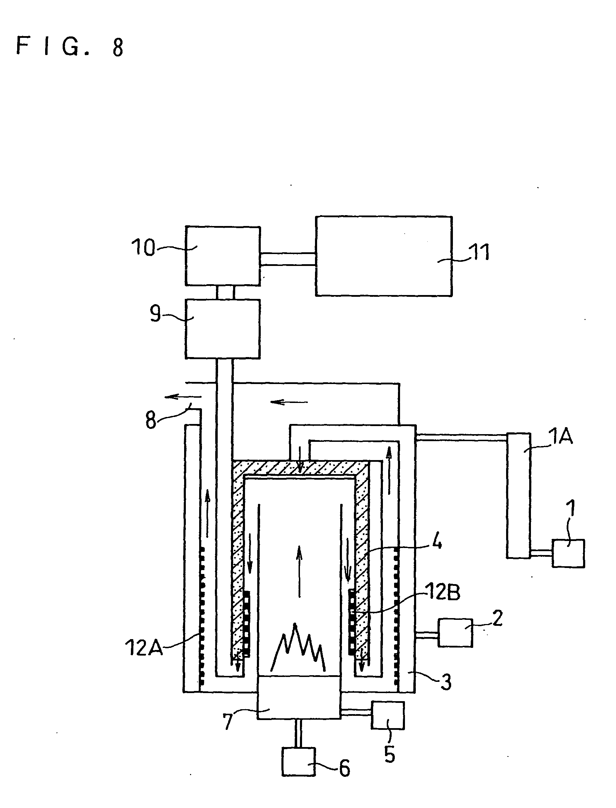

FIG. 8 is a view illustrating a structure of a hydrogen generator according to Embodiment 5 of the present invention. The hydrogen generator according to Embodiment 5 is substantially the same in structure as that of Embodiment 1 except that the catalytic species is not supported on the carrier but applied to the wall of the combustion gas flow path adjacent to the water vaporization part 3 to provide combustion catalyst parts 12A, and that a plurality of platelike heat transfer fins are provided on the wall of the reforming part 4 in a perpendicular direction to the combustion gas flow, to which the catalytic species is applied to provide combustion catalyst parts 12B on the heat transfer fins.

According to this embodiment, CO in the combustion gas is reduced by the combustion reaction on the combustion catalyst parts 12B and the combustion heat generated by the reaction is transferred to the reforming part 4, thereby improving the thermal efficiency of the reforming part 4. Further, since the combustion catalyst parts 12B are arranged in a region corresponding to the reforming part 4 where endothermic reaction occurs, the thermal capacity required for the reforming reaction is effectively transferred to the reforming part 4, thereby the conversion rate improves and the amount of hydrogen generated increases. On the other hand, CO in the combustion gas is further reduced by the combustion reaction on the combustion catalyst parts 12A and the combustion heat generated by the reaction is transferred to the water vaporization part 3. Thereby, vapor is generated in the water vaporization part 3 with stability. Thus, the reforming reaction occurs with stability and the amount of hydrogen generated becomes constant.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A hydrogen generator comprising:
a raw material supply part for supplying a raw material containing a compound formed of at least carbon and hydrogen;
a water supply part for supplying water;
a water vaporization part for vaporizing water supplied from said water supply part;
a reforming part including a reforming catalyst for generating reformed gas from said raw material and said water by steam reforming reaction;
a burner for heating said reforming part;
a fuel supply part for supplying fuel to said burner;
a first air supply part for supplying air for combustion to said burner; and
a combustion catalyst arranged in a combustion gas flow path for passing combustion gas discharged from said burner.

2. The hydrogen generator in accordance with claim 1, wherein said burner is arranged in proximity to said water vaporization part.

3. The hydrogen generator in accordance with claim 1, wherein product gas discharged from said hydrogen generator is mixed with fuel supplied from said fuel supply part and fed into said burner.

4. The hydrogen generator in accordance with claim 2, wherein said combustion catalyst is in contact with said water vaporization part.

5. The hydrogen generator in accordance with claim 2, wherein said combustion catalyst is integrated with said water vaporization part.

6. The hydrogen generator in accordance with claim 2, wherein said combustion catalyst is applied to the surface of said water vaporization part.

7. The hydrogen generator in accordance with claim 2, wherein said combustion gas in said combustion gas flow path has a temperature not lower than 100°C and not higher than 200°C.

8. The hydrogen generator in accordance with claim 2, wherein said combustion gas flow path surrounds said reforming part and said water vaporization part surrounds said combustion gas flow path.

9. The hydrogen generator in accordance with claim 2, wherein a second air supply part for supplying air to said combustion catalyst in said combustion gas flow path is provided between said burner and said combustion catalyst.

10. The hydrogen generator in accordance with claim 1, wherein said second air supply part supplies air such that the ratio of air quantity supplied from said first air supply part to air quantity theoretically required for combustion of fuel in said burner becomes not larger than 1, and the ratio of total air quantity supplied from said first air supply part and said second air supply part to the air quantity theoretically required for combustion of fuel in said burner becomes not smaller than 1.

11. The hydrogen generator in accordance with claim 1, wherein said combustion catalyst is supported by a carrier formed of a corrugated thin metal plate and/or a flat thin metal plate.

12. The hydrogen generator in accordance with claim 1, wherein said combustion catalyst is in the honeycomb form and/or the pellet form.

13. An electric generator comprising the hydrogen generator in accordance with claim 1 and a fuel cell for generating electric power using oxygen-containing oxidant gas and hydrogen-containing reformed gas supplied by said hydrogen generator.
